# EUROPEAN PATENT SPECIFICATION

(11) **EP 2 742 509 B1**
(45) Date of publication and mention of the grant of the patent: **09.12.2015**
(21) Application number: 12759248.3
(22) Date of filing: 27.07.2012
(51) Int. Cl.: G21D 1/00, G21D 1/02, G21D 3/06, G21D 9/00, G21F 9/00, G21F 9/02, G21F 9/18

(54) **SYSTEM FOR ABATEMENT OF NOXIOUS EMISSIONS IN THE ATMOSPHERE FROM AN INDUSTRIAL OR NUCLEAR POWER PLANT**
SYSTEM ZUR BESEITIGUNG VON AUS INDUSTRIEANLAGEN ODER KERNKRAFTWERKEN STAMMENDEN SCHADSTOFFEMISSIONEN IN DER ATMOSPHÄRE
SYSTÈME POUR RÉDUCTION D'ÉMISSIONS NUISIBLES DANS L'ATMOSPHÈRE DEPUIS UNE CENTRALE ÉLECTRIQUE INDUSTRIELLE OU NUCLÉAIRE

(30) Priority: 11.08.2011 IT TO20110763
(43) Date of publication of application: 18.06.2014
(73) Proprietor: Marcopolo Engineering S.P.A. Sistemi Ecologici, 12011 Borgo S. Dalmazzo (Cuneo) (IT)
(72) Inventor: BERTOLOTTO, Antonio, 12011 Borgo San Dalmazzo (Cuneo) (IT)
(74) Representative: Gallarotti, Franco
(86) International application number: PCT/IB2012/053858
(87) International publication number: WO 2013/021308

(56) References cited:
- EP-A1- 0 491 454
- DE-A1-102008 038 262
- JP-A- 1 176 988
- JP-A- 5 087 983
- US-A- 4 056 436
- US-A- 4 129 627
- US-A- 4 971 752

## Description

### Field of the invention

The present invention relates to a protection system designed for use in plants that, in the event of accident, are subject to release of noxious and contaminating substances. The invention has been developed with particular reference to nuclear power plants and stations, but its application is not ruled out in combination with industrial plants and similar installations.

### Prior art

The most recent accidents that have occurred within nuclear power plants, industrial plants and similar surface installation highlight the lack of systems and methods aimed at limiting the dispersion of toxic substances and radionuclides into the atmosphere, or the contact of said noxious substances with groundwater, or with waters of rivers, lakes, and seas.

Patent document US 4,056,436 discloses a system for extracting radionuclides out of the atmosphere inside a nuclear reactor containment building by sprinkling cooling water inside the containment. The radionuclides are extracted from the water using an ion exchange filter.

### Summary and object of the invention

The aim of the present invention is basically to indicate a system and a method that enables, in an efficient and fast way, an efficient capture and/or an efficient abatement of the noxious and contaminating emissions by those plants that, in the event of accident, are subject to release of said emissions, and also the possibility of locally limit in a limited area the environmental damage.

Another aim of the invention is to provide a protection system of this sort that is relatively simple and economic to build, in view of the benefits afforded.

An auxiliary aim of the invention is to indicate means and methodologies that enable the plant to be made safe in a fast and efficient way and at a low cost, when the facility, following upon the accident, cannot be recovered and remains, instead, a source of noxious emissions.

The above and yet other aims, which will emerge more clearly hereinafter, are achieved according to the invention by a system and a method according to claims 1 and 12.

With the system according to the invention, immediately after an accident has occurred, it is possible to activate delivery of jets of water - particularly via suitable cannons, preferably with nebulisation e/or with powder and/or foam products - by means of the aforesaid towers so as to limit diffusion of the noxious emissions in the air, at the same time obtaining precipitation thereof *in situ,* on the impermeabilization structure. The water, and/or the possible others products used, which prevents dispersion of the contaminants, is thus withheld in the immediate vicinity of the plant, thanks to the impermeabilization structure, at the same time preventing contamination of the soil and of groundwater or of waters of rivers, lakes, and seas. The contaminated water and/or powder products and/or foams withheld by the impermeabilization structure then flow into the collection structure, so that they will be rendered safe and purified or decontaminated. The impermeabilization structure can advantageously present at least a slight slope, in order to favour off-flow of water towards the collection structure.

The system proves, however, useful even in the absence of an accident to the plant occurring, in so far as the impermeabilization and collection structures can be exploited for withholding water of atmospheric origin, which can be used for various purposes (for example, for supplying auxiliary systems of the plant or for irrigation). Said clean water of atmospheric origin can be used for supplying the sprinkling towers, if these are, for example, used for irrigating the soil overlying the impermeabilization structure.

In a preferred embodiment, the plurality of sprinkling towers comprises at least one of a series of first towers, arranged directly within the precincts of the plant and/or on its immediate boundaries, and a series of second towers, arranged in the annular area provided with the impermeabilization structure. The towers preferably have a height such that the water and/or other products will be sprinkled over the structures of the plant. Preferably both the first and the second towers are envisaged.

In this way, around the area in which the plant stands, and directly in its precincts, it is possible to provide series of towers arranged substantially according to a number of concentric rings, which cover practically entirely with artificial rain both the area of the plant and the annular area that surrounds it. It is thus possible to contain as effectively as possible dispersion into the atmosphere of the noxious substances. For this purpose there may also be provided sprinkling towers having different heights: in such an embodiment, preferably, the highest towers will be the ones closest to the plant.

In one embodiment, each tower is provided with means for supply of the water to be sprinkled, which comprise a first tank, provided in the proximity or at the top of the tower, and in fluid communication with the respective sprinkling means.

In this way, each tower is provided with a reserve of water that can be sprinkled immediately following upon the accident, with the first tank having a capacity that will be such as to guarantee in any case a certain time of autonomy of the system, without the need to pump water coming from a remote site. Preferably, each tower will be also provided with an autonomous source of electrical energy, such as an engine-generator set, photovoltaic panels, and/or a wind-power system, in order to make up for any possible interruption of the electrical mains supply.

In one embodiment, the means for supply of water to the sprinkling towers also comprise a second tank, provided on the ground, which is in fluid communication with the first tank provided directly on the tower. In this way, tanks are pre-arranged having a considerably greater capacity than those provided directly on the towers in order to guarantee prolonged operativeness of the sprinkling system. The second tanks, for example supplied via river water or groundwater, are preferably located in a remote position with respect to the towers, in particular outside the area where the impermeabilization structure is present, and connected to the tanks provided on the towers via a supply line equipped with pumping means. For safety purposes, there may be envisaged an autonomous power-supply source, such as an engine-generator set, also for the pumping means in order to make up for any possible interruption of the electrical mains supply.

In a preferred embodiment, the collection structure surrounds practically completely the impermeabilization structure in order to guarantee that the collection of water is as fast and efficient as possible, and in order to reduce the risk of dispersion of said water outside the impermeabilized area into the soil. Preferably, the collection structure comprises at least one annular channel, having an inner wall that substantially corresponds to the outer perimeter of the impermeabilization structure, with which it co-operates for purposes of fluid-tightness.

In one embodiment, the sprinkling towers further comprise means for dispersion into the atmosphere of adsorbent material, for example zeolite powder, which contributes to capturing the noxious substances dispersed in the air and/or to cause them to precipitate. In this way, the risks of dispersion of the noxious substances from the plant are further reduced. Advantageously, on one or more towers there will then be provided also the means designed to disperse the adsorbent material, for example in the form of pneumatic cannons, with the corresponding supply means, which comprise, for example, a local reservoir for the powder and a corresponding actuator (for example, a compressor), which, if need be, may be supplied by means of the aforementioned autonomous source of electrical energy. Of course, in order to guarantee protracted operativeness of the dispersion system, there may be envisaged a greater reserve of powder either within the tower (for example, a silo inside the structure of the tower) or in a remote position with respect to the tower (in this case, the supply of powder to the tower will take place with modalities similar to the ones referred to above in relation to the second water tanks for the towers).

In a particularly advantageous embodiment, provided above the impermeabilization structure is a plurality of drains, each of which extends in a radial direction, substantially starting from the bounds of the area of the plant as far as the outer perimeter of the annular area where the impermeabilization structure is present. These drains, arranged substantially radially, favour precise conveyance of the water withheld by the impermeabilization structure towards the collection structure, which is located in a position substantially corresponding to the outer perimeter of the impermeabilization structure.

Preferably, also an annular drain is provided, into which the radial drains converge. Said annular drain substantially corresponds to the inner wall of the channel belonging to the collection structure and is in fluid communication with the inside of said channel. This annular drain hence provides a sort of large collector for the radial drains, for the purposes of subsequent conveyance of the water into the aforesaid channel.

In a preferred embodiment, the radial drains, and preferably also the annular drain, are formed with stones or crushed rocky material and are at least partially buried in one or more layers of some other material laid on top of the impermeabilization structure. The drains are consequently simple to lay, and their integrity over time is protected by the overlying material. The material for covering the impermeabilization structure can include a number of different layers, for example - from the bottom up - a layer of crushed zeolites, a layer of gravel finer than the one that constitutes the drains, a layer of soil, a layer of humus, and/or grass turf.

In one embodiment, the impermeabilization structure comprises a plurality of tarpaulins, made, for example, of polyethylene, preferably high-density polyethylene (HDPE). Once again preferentially, set between two tarpaulins is at least one layer of granular material, in particular zeolites; this impermeabilization pack can rest on a layer of a clay-type impermeabilization material, in order to improve the capacity of impermeabilization of the area.

This type of structure guarantees a high degree of impermeabilization, which prevents any possible migration of water and possible contaminating substances into the underlying soil. The reliability of the structure can be increased by laying also sheets of non-woven fabric, for example between each tarpaulin and a corresponding layer of granular material.

As has been seen previously, in the event of accident on the plant with subsequent emission of contaminants, the system provided according to the invention is activated in order to contain diffusion of the noxious substances released by the plant. Activation is preferably governed in an automated way, using control techniques in themselves known in the field of safety systems for industrial plants and nuclear power stations, but not excluded is evidently the possibility of manual activation, even from a control station that is located in a remote position with respect to the plant.

The accident can be so serious as not to enable recoverability of the plant, even to the point where the plant remains a source of noxious emissions. In such a case, the methodology proposed according to one embodiment of the invention envisages the operation of covering the plant itself and the impermeabilized annular area that surrounds it with a material suitable for creating a bio-reactor.

In this way, it is possible to prevent continuous leakage of the contaminants after the accident, and at the same time, obtain a vehicle for capturing the contaminants themselves. Capture of the contaminants takes place by capturing the biogas that is produced from methanogenesis of the biomass that constitutes the bio-reactor, with the contaminants that can then be eliminated in the process of purification of the biogas, for example, before it is sent on for incineration in engines belonging to an electric-power generator system.

It will be appreciated that, for the purposes of creation of the bio-reactor after the accident, it is possible to exploit directly in an extremely advantageous way the impermeabilization structure, already previously arranged. Said structure enables isolation of the biomass with respect to the soil and the aquifers, as well as retention of the polluted percolate that originates subsequently; said percolate may be made to flow into the collection structure so as to undergo subsequent purification and/or decontamination.

In a particularly advantageous embodiment, the material used for creating the bio-reactor comprises urban and/or industrial solid waste.

Said type of material is readily available, with continuity, and in large quantities, thus favouring implementation of the safety measures for the plant in relatively short times and at a low cost. The waste may comprise the wet fraction of urban solid waste, or else urban solid waste as such, or else again selected urban solid waste. The waste may be either in bulk form or in bales, possibly wrapped in cellophane.

### Brief description of the drawings

Further purposes, characteristics, and advantages of the invention will emerge clearly from the ensuing detailed description, provided purely by way of non-limiting example with reference to the annexed drawings, wherein:
- Figure 1 is a partial and schematic cross-sectional view of a nuclear power plant provided with a safety system according to the invention;
- Figure 2 is a second partial and schematic cross-sectional view, at a larger scale as compared to Figure 1, of the power plant and of the system of Figure 1;
- Figure 3 is a schematic top plan view of the power plant and of the system of Figure 1;
- Figure 4 is a schematic side view of a top portion of a sprinkling tower forming part of the system according to the invention;
- Figures 5 and 6 are a schematic side view and a schematic top plan view, respectively, of a top portion of a sprinkling tower according to a variant of the invention;
- Figure 7 is a partial and schematic cross-sectional view of a peripheral region of the system of Figure 1, at a larger scale;
- Figures 8 and 9 are two partial and schematic cross-sectional views, at an enlarged scale, orthogonal to one another, of an impermeabilization and drainage structure of the system according to the invention;
- Figure 10 is a partial and schematic top plan view of the system according to the invention, aimed at highlighting the arrangement of a series of bottom drains;
- Figure 11 is a partial and schematic cross-sectional view of a bio-reactor that functions as cover for the plant of Figure 1, according to one embodiment of the invention;
- Figure 12 is a cross-sectional view similar to that of Figure 11, at a larger scale;
- Figure 13 is a partial and schematic cross-sectional view of an impermeabilization and surface-drainage structure of the bio-reactor of Figure 12, at a larger scale;
- Figure 14 is a partial and schematic cross-sectional view, at a larger scale as compared to that of Figure 12, of a peripheral region of the bio-reactor;
- Figure 15 is a partial and schematic cross-sectional view, at an enlarged scale, of a peripheral region of the system according to the invention, in the absence of the bio-reactor;
- Figure 16 is a cross-sectional view similar to that of Figure 15, in the presence of the bio-reactor;
- Figure 17 is a view similar to that of Figure 10, aimed at highlighting the arrangement of a series of top drains of the bio-reactor;
- Figures 18 and 19 are two partial and schematic cross-sectional views of a possible variant of the invention;
- Figure 20 is a partial and schematic cross-sectional view of the bio-reactor of Figure 11, with highlighted biogas-capturing wells;
- Figure 21 is a partial schematic cross-sectional view of one of the wells of Figure 20;
- Figure 22 is a schematic top plan view of a possible division of the area surrounding the power plant of Figure 1, in a possible implementation of the invention; and
- Figure 23 is a detail at a larger scale of an area of the power plant of Figure 22.

### Description of preferred embodiments of the invention

In the ensuing description, various specific details are illustrated aimed at providing an in-depth understanding of the embodiments.

Reference to "an embodiment" or "one embodiment" in the framework of the present description is meant to indicate that a particular configuration, structure, or characteristic described in relation to the embodiment is comprised in at least one embodiment. Hence, phrases such as "in an embodiment" or "in one embodiment" that may be present in various points of this description do not necessarily refer to one and the same embodiment. Moreover, particular conformations, structures, or characteristics may be combined in any adequate way in one or more embodiments.

It is highlighted that, in the frame of the present description and the annexed claims, the term "atmosphere" is to be meant as part of the ambient in the open air surrounding the plant to be protected, provided that the invention is designed for use essentially in conjunction with surface or "open-work" plants and similar installations (i.e. not built exclusively or mostly in the underground, such as for example in US-A-4,971,752).

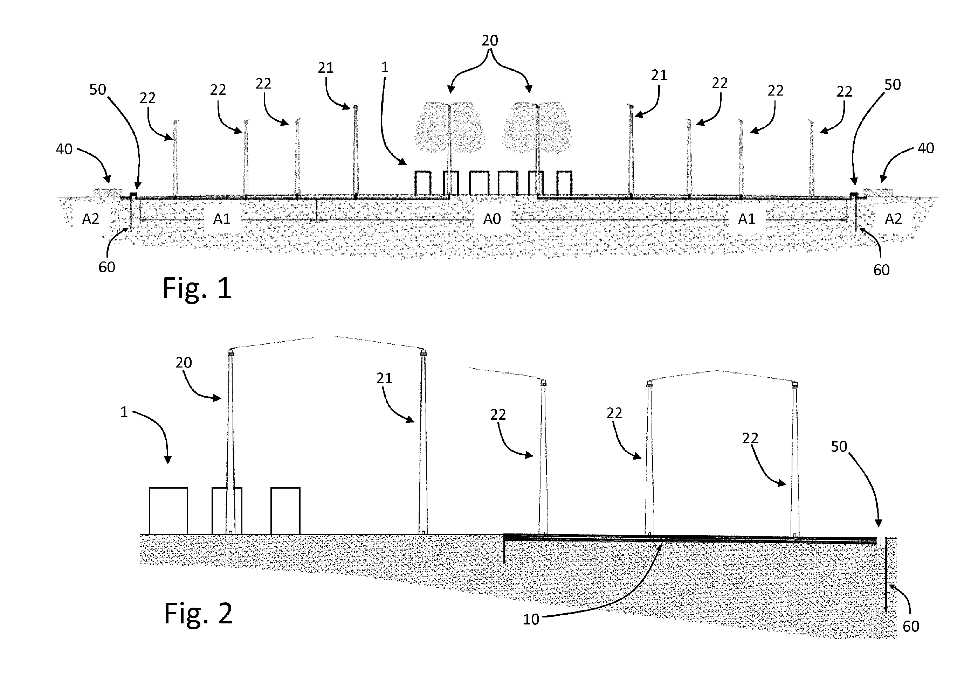

In Figures 1 and 2, the reference 1 designates as a whole the structure of a nuclear power plant, which is located within an area A0, in the open air, the perimeter of which is considered as the limit of each structure belonging to the power plant itself (flooring of buildings, roads, channels, fencing). In the example, it is assumed that the area A0 is substantially circular, with a diameter of approximately 500 m. As normally occurs, the area A0 is in itself provided with means for collection of meteoric water from the roofs and from the flooring of the power plant, which is impermeabilized or rendered such. All the water is collected by purposely provided storm drains and handled as already normally envisaged for any nuclear power plant or other industrial plant.

Identified around the area A0 is a peripheral area, designated by A1, which develops towards the outside starting from the perimeter of the area A0, for example for approximately 250 m.

The annular area A1, which encloses directly the area A0 in which the power plant 1 is located, is provided with a structure for impermeabilization of the ground, designated as a whole by 10 in Figure 2.

Around the nuclear power plant 1, in the area A0 and in the area A1, a sprinkling system is moreover provided in the open air, comprising sprinkling means mounted on towers which rise from the ground. Preferably, rings of sprinkling towers are provided both in the area A0 and in the area A1.

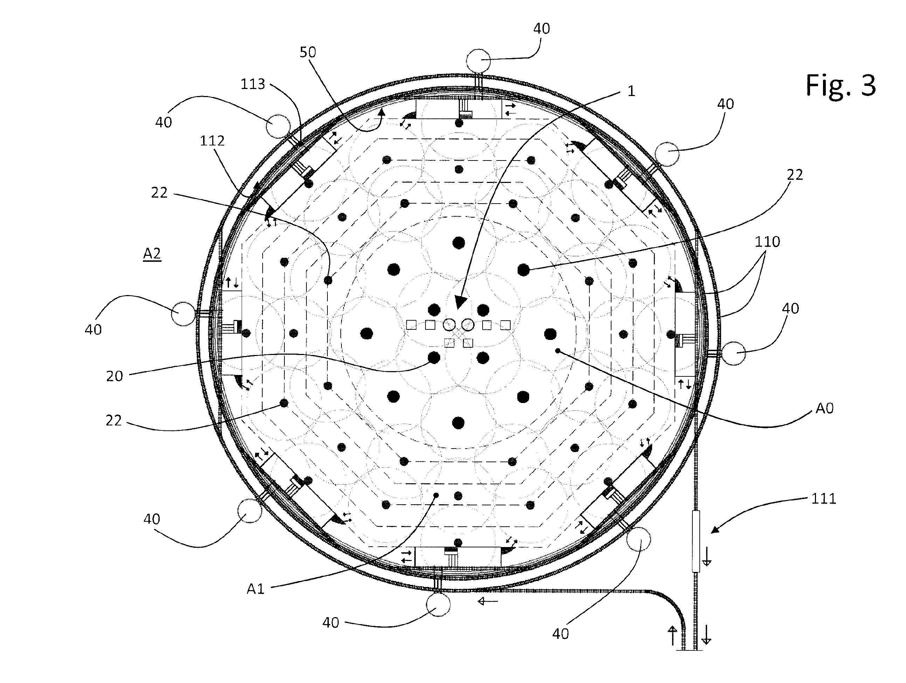

In the example illustrated, first towers 20 are provided, for example four towers, arranged substantially on a circumference within the area A0 around the nuclear reactor or reactors, in the open air. Once again in the area A0 second towers 21 are provided, also in the open air, arranged substantially according to a ring of a greater diameter as compared to the previous one, for example eight towers that are the same as the towers 20. In the preferred embodiment of the invention, one or more rings of sprinkling towers 22 are then provided also in the area A1. In the example shown, four concentric rings of eight towers each are provided, for a total of thirty-two towers. As may be seen, in the case exemplified in Figure 3, the towers of the concentric rings of towers 21 and 22 are arranged substantially according to the compass rose.

As may be seen in Figure 3, the arrangement of the rings of towers 20, 21 and 22 is such that the areas A0 and A1 are practically entirely covered by the artificial rain produced via the towers (in Figure 3, the circles that surround the towers indicate the sub-areas covered by the rain coming from each tower).

The height of the towers 20-22 is relatively great in order to be able to generate an artificial rain that exceeds in height the structures of the power plant 1. This artificial rain may possibly be added with chemical and/or biological and/or mineral substances, suitable for containing further the dispersion in the air of noxious substances and radiation in the event of accident, as well as for favouring precipitation thereof to the ground. Indicatively, the towers 20 and 21 may be approximately 120 m high, whilst the towers 22 may be approximately 100 m high. The structure of the towers may be of any type deemed suitable, for example a metal structure, a concrete structure, or a prefabricated structure. Preferably, each tower will have a respective base, for example made of concrete, adequately buried in the ground, and built according to known antiseismic procedures. Of course, the impermeabilization structure 10 will be laid so as to provide an adequate tightness in regard to the bottom part of the towers.

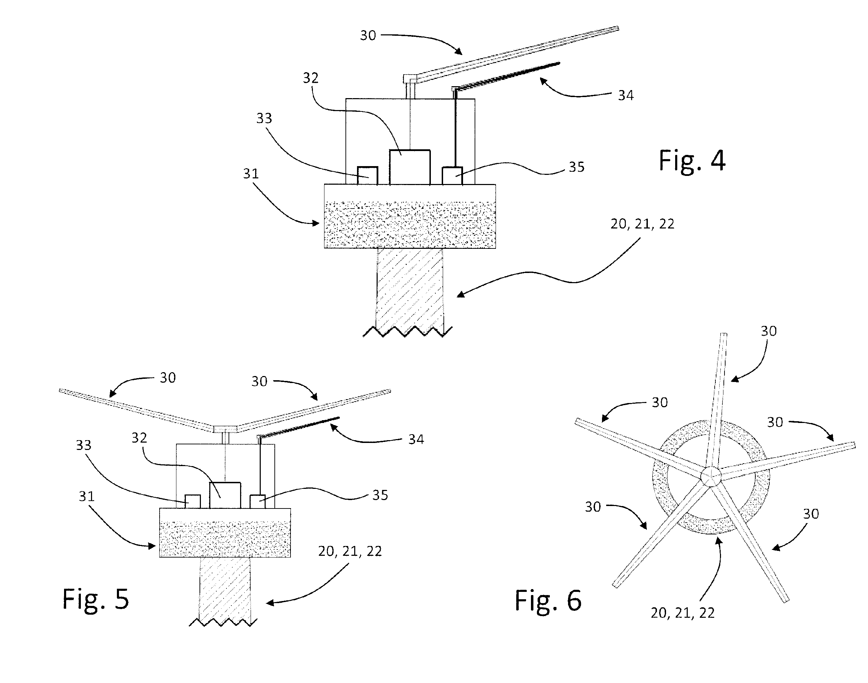

As exemplified in Figure 4, mounted on top of each tower are the water-sprinkling means, for example comprising a rotary sprinkling cannon 30, designed to issue a pressurized jet; the length of the jets generated may indicatively be about 70-80 m. The cannons 30 may possibly be motor-driven in order to regulate the position or rotation thereof, for example via a remote computer. Preferably, the jets of water generated have a certain elevation, for example of 20 m, or in any case such as to cause the rain to drop from a height of approximately 140 and 120 m, for the towers 20-21 and 22, respectively.

Preferably, mounted on each tower 20-22 is a first tank 31, or accumulation reservoir. Said tank, for example having a useful volume of approximately 64 m³, contains a reserve of water such as to guarantee a first period of artificial rain (for example, for the first 20 minutes 12 mm/hour of rain per square metre). This water may possibly be already added with products designed to favour precipitation and/or adsorption of chemical and radioactive powders and dusts.

The water contained in the tank 31 is supplied to the respective sprinkling cannon 30 via a pump 32, for example an electric motor-pump. The movement of the cannon 30 (if said movement is motor-driven) and of the pump 32 is guaranteed even in the case of interruption of the mains supply, thanks to an autonomous generator 33, such as an auxiliary diesel engine-generator set.

In one embodiment, also installed on the towers 20-21 are means for dispersion of a powdery adsorbent material, such as zeolite powder, together with or separately from the jets generated by the cannons 30. Said means can comprise, for example, a pneumatic cannon, designated by 34 in Figure 4. The aforesaid powders can be stored in a corresponding reservoir 35 and/or in a silo with incorporated desilator, set at the base of the tower or else inside it with pneumatic delivery to the cannon 34.

Note that the sprinkling means that equip the towers 20-21 may also include two or more cannons 30. Figures 5 and 6 exemplify the case of a tower 20 provided with five cannons 30 mounted on a common base, such as a rotary or fixed base where each cannon, thanks to a mechanical movement provided by the thrust of the water, can turn for example to the right and to the left through 45° or 90°.

Preferably, the means for supply of water to the towers 20-22 also comprise second tanks, set on the ground and connected in fluid communication with the tank 31 provided on each tower, via a supply line equipped with pump.

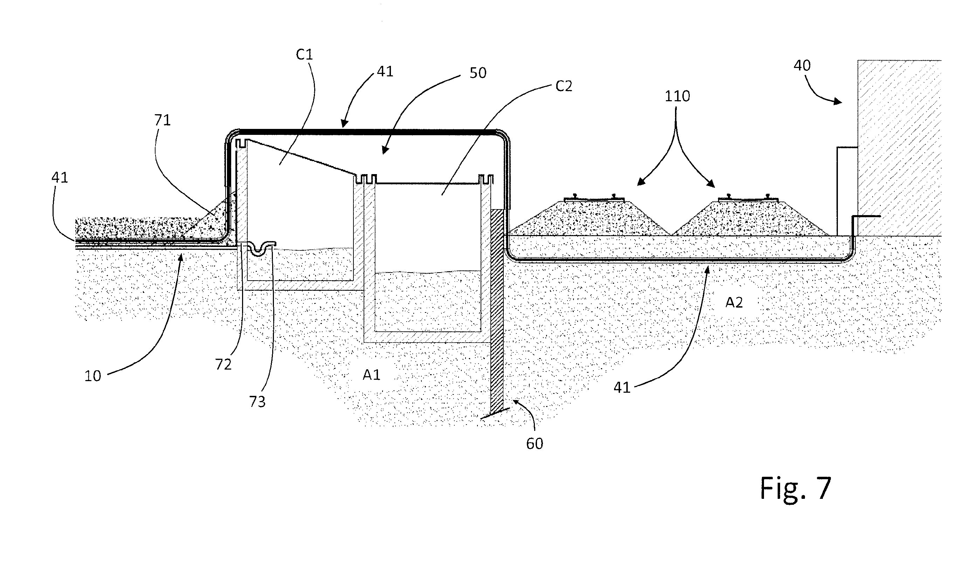

In the example, the water reserves for water supply of the sprinkling towers 20-22 are contained in additional tanks, designated by 40 in Figures 1, 3 and 7. These tanks, for example eight 10 000-m³ circular tanks, can be arranged immediately outside the area A1, within the area designated by A2. From the tanks 40 the water reaches the towers 20-22 through pipes, for example made of polyethylene and having a diameter of 100 mm, partially inserted in suitable buried storm drains made of reinforced concrete, as exemplified in Figure 7. The water is supplied to each tower 20-22 with a pumping system, calibrated so as to maintain always a minimum level (for example 70%) in the tanks 31 positioned on top of each tower.

The flow rate of the pumping system and the capacity of the tanks 40 is preferably chosen in such a way that each tank 40 can supply all the towers 20-22 for at least one hour. In this way, using all the tanks 40, the operativeness of the sprinkling system can in any case be guaranteed for at least eight hours (12 mm/hour of artificial rain per square metre for just one sprinkling cannon per tower; if, for example, there are five cannons per tower, the minimum time guaranteed will be 96 minutes for each cannon). Said time can obviously be prolonged, according to the need, on the areas A0 and A1. The tanks 40 can, for example, be supplied from a river present in the area, with a purposely provided plumbing system with adequate flowrate (for example, not less than 0.3 m³ per second for each tank 40), such to guarantee operation with a sprinkling cannon mounted on each tower and with all the sprinkling cannons functioning together.

The artificial rain generated by means of the towers 20-22 (as likewise the possible dispersion of the adsorbent powders) can be controlled via a computer. In said perspective, for example, the motor-driven cannon 30 (and/or 34) of a tower can also be controlled for orienting the respective jet towards a direction of particular interest (for example, where a noxious cloud is developing). For such a case, the towers can be operative all at once, or else independently of one another.

As has been said, in the area A1 that surrounds the area A0 (and hence the power plant 1) the soil is rendered impermeable via the impermeabilization structure designated by 10 in Figure 2. Of course, the internal perimeter of the structure 10 is coupled in a fluid-tight way to the impermeable flooring of the area A0.

The soil of the area A1 is previously scarified and levelled, preferably providing it with at least a modest slope from the area A0 outwards, for example a slope of at least 1%. Next, the impermeabilization structure 10 is laid, which, for example, can be obtained with a packet of tarpaulins of the type commonly used for covering dumps of dangerous waste. Said packet of tarpaulins preferably comprises at least two tarpaulins set on top of one another, for example made of polyethylene, preferably high-density polyethylene (HDPE), each indicatively at least two 2 mm thick; between the two sheets there can be set a layer of granular material, such as zeolites. Possibly, in case of plants of new constructions, the impermeabilization structure 10 may extend also below the structures and/or the flooring of the plant of the area A0. As said, in any case, the same flooring structure of the plant embodies in itself an impermeabilization structure, to which there are associated means for water regimentation; preferably, this means for water regimentation will be provided with devices for retaining the additives or other solid substances sprinkled from the sprinkling tower, such as drain with filters, sedimentation devices and the like.

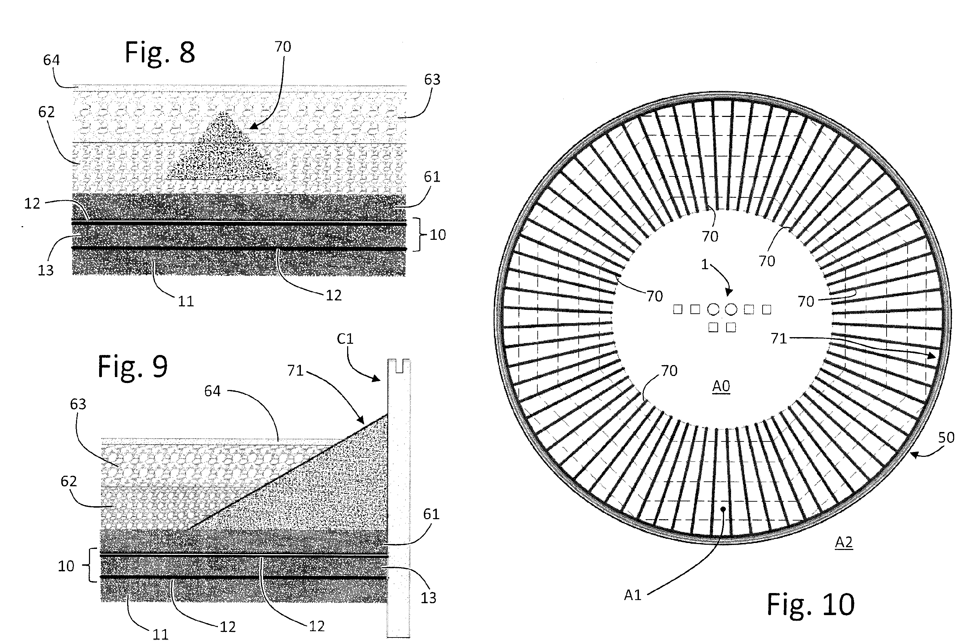

In one embodiment (see Figures 8 and 9), on the soil of the area A1 (appropriately scarified, for example, removing the first 200 mm of vegetable cover) there is first laid a layer of sand 11 (for example, approximately 200 mm thick), and then two HDPE tarpaulins 12. In a preferred embodiment, after laying of the first tarpaulin 12, a sheet of non-woven fabric (for example, 10 mm thick) is laid thereon, and immediately on top of this a layer 13 of zeolites (for example, 200 mm thick) is laid. On the layer of zeolites 13 another sheet of non-woven fabric (for example identical to the previous one) is then laid, in turn covered by the second HDPE tarpaulin 12, which also may be covered at the top with a further sheet of non-woven fabric. As has already been said, the impermeabilization of the ground is of course obtained in such a way that the packet of sheets surrounds in a waterproof way the bottom part of the sprinkling towers 20-22.

The system further comprises a peripheral collection structure, designated by 50 in Figures 1, 3 and 7, configured for receiving the water withheld by the impermeabilization structure 10. Preferably, and as may be seen in Figure 3, the structure 50 surrounds the impermeabilization structure 10 practically completely, and co-operates with the latter to guarantee water tightness.

The slope envisaged for the impermeabilization structure 10, which, as has been said, indicatively is not less than 1%, will convey the waters withheld towards the collection structure 50. For this purpose, in one embodiment, there is advantageously provided a series of drains, preferably with triangular cross section, which are set above the impermeabilization structure 10, said drains being then englobed in a draining layer which is also provided on the structure 10.

In one embodiment, at the outer limit of the area A1, a wall or diaphragm is provided, which preferably projects above the plane of lie of the annular area A2 external to the area A1, for example for approximately 1 m. Said diaphragm, designated by 60 in Figures 1, 2 and 7, extends in depth in the ground, for example for at least 50 m, and preferably beyond the second aquifer present (if this lies within the first 100 m of depth). The diaphragm 60 can have indicatively a thickness of 700 mm and be made of impermeable and antiseismic reinforced concrete in order to isolate the areas A0 and A1 from the surrounding aquifers, as well as to prevent leakage of water in the event of accident to the plant.

The collection structure 50 is provided immediately within the diaphragm 60, in a region substantially corresponding to the outer perimeter of the area A1. For this purpose, in the proximity of the top end of the diaphragm 60 at least one channel is provided, preferably two channels, for regimenting the surface waters of the areas A0 and A1, said channels being designated by C1 and C2 in Figure 7.

Also partially visible in Figure 7 is one of the tanks 40, with the supply line for the respective series of towers. As has been said, said line comprises a pipe 41, for example made of polyethylene, partially buried in suitable storm drains. As may be seen, the pipe 41 passes over the channels C1 and C2, and is then again buried, with suitable storm drains, in the draining packet provided above the impermeabilization structure 10.

In the example of Figures 8 and 9, said draining packet comprises a plurality of layers of different granular materials, namely:
- a layer 61 of granular zeolites (for example, approximately 200 mm thick);
- a layer 62 (for example, approximately 300 mm thick) of fine crushed gravel (50-80 mm in diameter);
- a layer 63 (for example, approximately 300 mm thick) of soil with crushed gravel (100-150 mm in diameter), such as to constitute a gravel flooring.

In one embodiment, laid on said gravel flooring 63 is a layer of humus 64, for example, approximately 10 cm thick. For said purpose, the product HUMUS ANENZY^{®} can be used, produced and marketed by the present applicant, pressed and possibly added with a consortium of micro-organisms, such as the one produced and marketed by the present applicant under the trade name ENZYVEBA^{®}. The layer 64 of humus - possibly added with the consortium of micro-organisms - may be also lawn sown.

Also visible in Figure 8 is one of the aforesaid drains, designated by 70. Said drains 70 have preferably a triangular cross section (for example, with the base of approximately 1 m and the height of approximately 500 mm) and are preferably provided with round non-calcareous stones, for example 80-120 mm in diameter. The drains 70 are laid on a first part (for example, the first 150 mm) of gravel of the layer 62 of the draining packet laid on the zeolites of the layer 61.

As is clearly visible also in Figure 10, the drains 70 start substantially from the outer perimeter of the area A0 and extend radially outwards and then terminate in a large circular drain 71, provided in a position substantially corresponding to the outer perimeter of the area A1, and more in particular in a position corresponding to the internal side of the collection structure 50, here represented by the channel C1.

In this way, regimentation of the waters is obtained within the areas A0 and A1, both in the absence of an accident and after an accident has occurred. As is evident, thanks to the structures 10 and 50 it becomes possible to handle, contain, and treat both meteoric waters and process waters sprinkled by the towers in the event of accident. In the event of nuclear accident, these waters can flow in the perimetral channel C1, provided for containing the first contaminated water and then enable treatment thereof. The waters pass through the network of drains 70 which are arranged radially above the impermeabilization packet of the area A1, and converge into the drain 71. In one embodiment, the water passes from the drain 71 to the channel C1 through holes 72 provided with siphons 73 (Figure 7) positioned in the inner wall of the channel C1, in contact with the drain 71 itself, at the points of convergence of the drains 70 with the drain 71.

The channel C1 can be laid *in loco* or prefabricated with reinforced concrete, can have a width of approximately 3 m, and, as in the example shown, may be partially buried. The channel C1 can be covered on top with a removable waterproof closing sheet, as may be seen in Figure 7.

The impermeabilization structure 10, here including the two tarpaulins 12 with the layer of zeolites 13 set in between (Figures 8 and 9), is hermetically sealed against the aforesaid inner wall of the channel C1, as far as its top (see Figure 7) so that the areas A0 and A1 are totally isolated with respect to the subsoil.

The channel C1, in the absence of an accident to the power plant 1, will always receive clean meteoric flowing water and, after the nuclear accident, will receive polluted flowing and percolation water from the area A1 and water converging with the regimented one coming from the area A0. As has been said, on the internal side of the channel C1 the annular drain 71 is provided, which is preferably covered with non-woven fabric to preserve integrity thereof. Preferably, also the drain 71, for example 1.5 m deep and 1 m high, has a substantially triangular cross section and is provided with round non-calcareous stones (for example, 80-120 mm in diameter).

In the event of a non-catastrophic nuclear accident, i.e., of the type in which the power plant 1 can be recovered and/or entails leakages of contaminants that can be eliminated, the system according to the invention enables prompt intervention by means of the artificial rains from the towers 20-22, with consequent capture and precipitation of the majority of the contaminants, through the impermeabilization structure 10 and the collection structure 50.

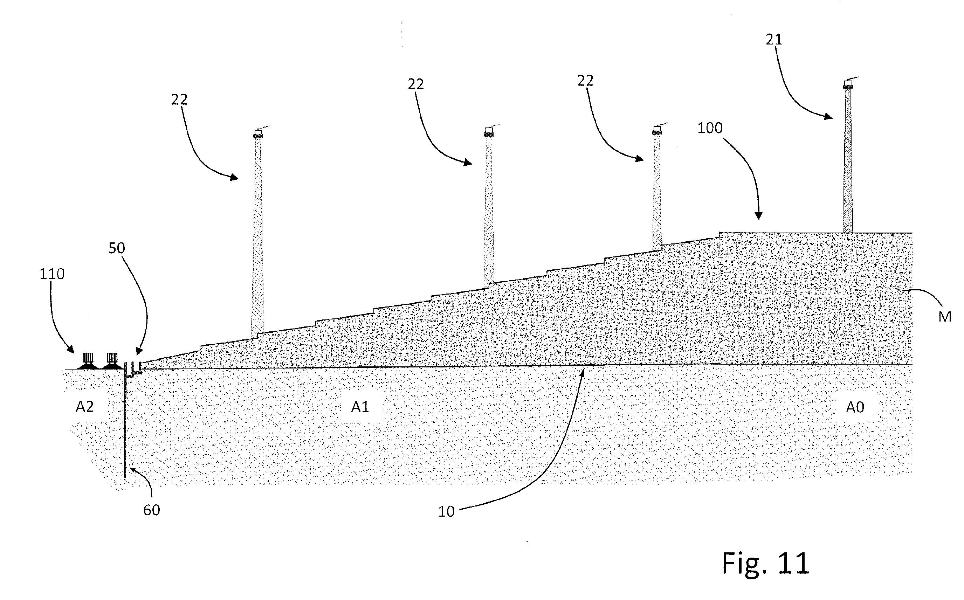

In one embodiment of the invention, in the event of non-recoverability of the plant following upon the accident, there is envisaged the operation of covering the area A0 (and hence the power plant 1) and the annular area A1 with a material M suitable for creating a bio-reactor. Said bio-reactor is partially visible in Figure 11, where it is designated as a whole by 100.

In a particularly advantageous embodiment, in the proximity of the outer perimeter of the area A1, in addition to the diaphragm 60, at least one service railway line 110 is provided. In the case exemplified, for example in Figures 3, 7 and 11, for this purpose two tracks are provided, for enabling transport and subsequent unloading, via wagons or similar means of transport, of the material M suitable for building the bio-reactor. Preferably, the aforesaid wagons for conveying the material are of the remote-controlled type, for example radio-controlled.

In one embodiment, the railway ring 110 that surrounds the area A1 has a plurality of entry points, not represented, provided with switches, which overly the diaphragm 60 and the structure 50 represented by the channels C1 and C2, in order to access the area A1 and hence enable unloading of the material M.

Advantageously, along the railway line 110 a flushing station may be provided, for example of the tunnel type, designated by 111 in Figure 3. In said station 111, the wagons are flushed, after they have unloaded the material M; the flushing waters are conveyed from the station 111 into the channel C1, or else sent directly on for purification. The traffic of the wagons for conveying the material M will be preferably handled in an automated way, for example via a control/management centre.

Once the material has been unloaded within the area A1, suitable means for moving material (such as mechanical shovels, dumpers, grabs, bowl scrapers, etc.) distribute said material. Said means moving material are, of course, equipped with cabs provided with all the arrangements necessary to prevent contamination from pollutants of the staff responsible for carrying of the work. Where possible, on the other hand, also said means will be of a remote-controlled type, for example radio-controlled.

In a preferred embodiment, the material M used for creating the bio-reactor comprises urban solid waste. Said waste may be constituted by the wet fraction of urban solid waste, or else by urban solid waste as such, or else again by selected urban solid waste (i.e., deprived of valuable parts, such as metals, paper, glass). The waste that reaches the site, in order to be delivered to the wagons, may be in bulk form or else in bales. Another solution is to provide *in loco* a pressing line for compressing the loose waste, for example, a line for each of the points where the material is unloaded. The loose waste arriving is thus converted into bales, and then transported to the dumping points into the areas A0 and A1.

With reference to said embodiment, unloading of the waste M is made in pre-set points, served by the railway line 110, in which stretches of rail governed by switches extend above the diaphragm 60 and above the channels C1 and C2 (one of said stretches is designated by 112 in Figure 3). The railway vehicles dump the waste on a corresponding yard inside the area A1 (one of said yards is designated by 113 in Figure 3), from which other mechanical means (telescopic grabs, mechanical shovels, dumpers, compactors, etc.), which are preferably remote-controlled, pick up the waste and distribute it, compacting it as required on the areas A0 and A1.

The bio-reactor 100 is thus created with stratification of waste in bulk form or in bales, rising towards the inside of the area A1, where the layers have diameters substantially decreasing as the structure develops in height. In this way, the bio-reactor 100 assumes an approximately pyramidal shape, preferably with steps corresponding to the various layers each time deposited. For example, starting from the wall of the channel C1 raised above the plane of lie, there starts laying of the various layers of waste, each having a height of approximately 2-3 m, thus giving rise to the aforesaid steps.

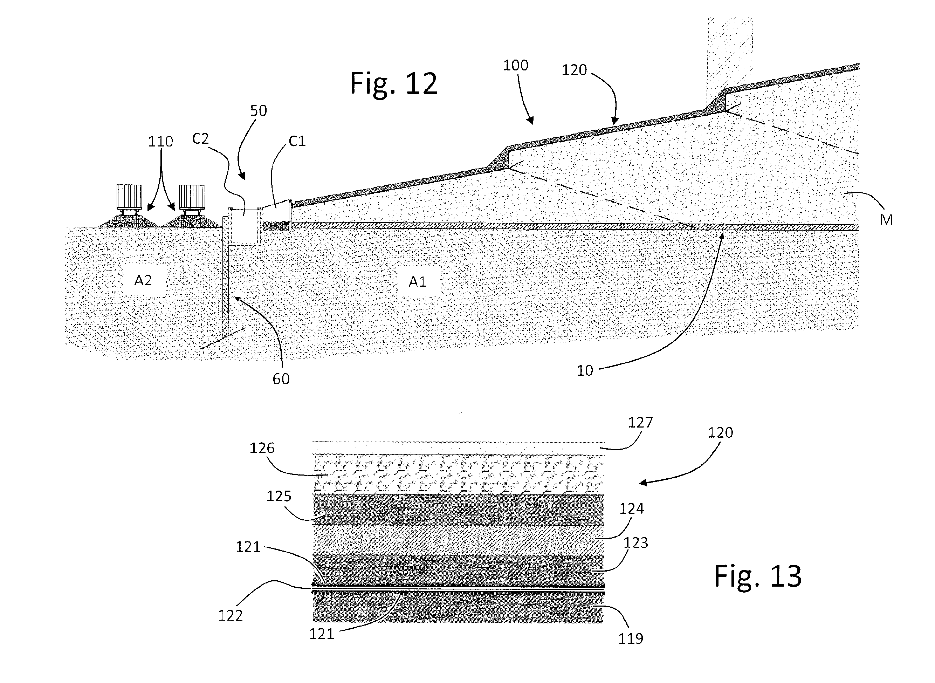

During distribution and compacting of the waste M to obtain the bio-reactor 100 (whether said waste is in bulk form or in bales), for each step a layer of zeolites is laid, for example 20 to 50 mm thick, designated by 119 in Figure 13. Preferably, said layer of zeolites does not involve the entire top surface of the layer of waste of the step, but only its peripheral part (for example, approximately 25 m towards the centre of the layer of waste). The layer of zeolites, which can have a thickness of between 200 and 300 mm, advantageously functions also as roadbed for the vehicles used for distributing and compacting of the waste.

Finally, the layer 119 of zeolites of each step is covered with a draining and impermeabilization multilayer structure, designated by 120 in Figure 12, which includes at least one tarpaulin. As highlighted in Figure 13, said structure 120 can, for example, comprise (in order, from the bottom up):
- a first sheet 121 of non-woven fabric;
- a tarpaulin 122 made of polyethylene, preferably HDPE;
- a second sheet 121 of non-woven fabric;
- a layer 123 of zeolites;
- a coating 124 of impermeable clay;
- a layer 125 of sand;
- a layer 126 of soil with crushed gravel; and
- a layer 127 of humus (for example, HUMUS ANENZY^{®}) possibly bio-activated with a consortium of micro-organisms (for example, ENZYVEBA^{®}), said last layer possibly being then sown with adsorbent grass plants.

The structure 120 prevents possible exit of radiation and entry of ambient air and rain within the bio-reactor 100. At the points where the biogas-capturing wells (described hereinafter) and the towers 20-22 are located, the tarpaulin 122 will be adequately shaped and fixed to guarantee fluid tightness, and hence prevent entry of air and/or exit of biogas.

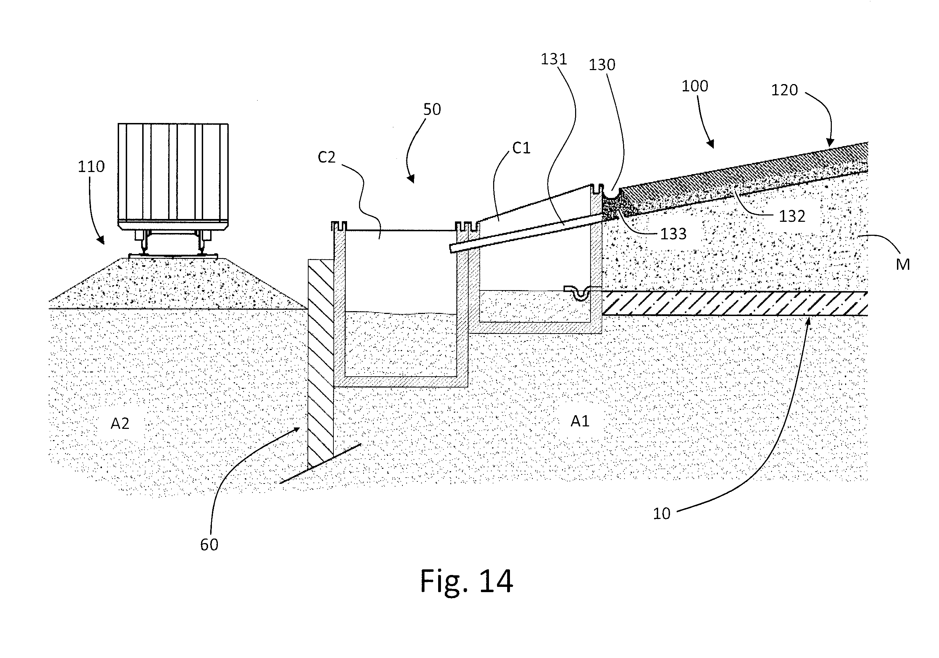

The covering structure 120 is built up as the bio-reactor 100 "rises", as far as its top, which will be located substantially above the power plant 1, at an indicative height of 50-60 metres. In the bottom part of the bio-reactor, the polyethylene tarpaulin 122 is bonded to the inner wall of the channel C1. In this way, mixing is prevented between the percolation waters inside the bio-reactor 100, which flow via the drains 70 and 71 into the channel C1, and the waters outside and at the surface of the bio-reactor 100, which flow into the channel C2. For this purpose, as exemplified in Figure 14, in said area there can be defined a storm drain 130, which is connected to the channel C2 via purposely provided passages and pipes 131 traversing the channel C1. The meteoric or artificial waters that drop onto the bio-reactor 100 hence flow towards the storm drain 130, and then reach the inside of the channel C2.

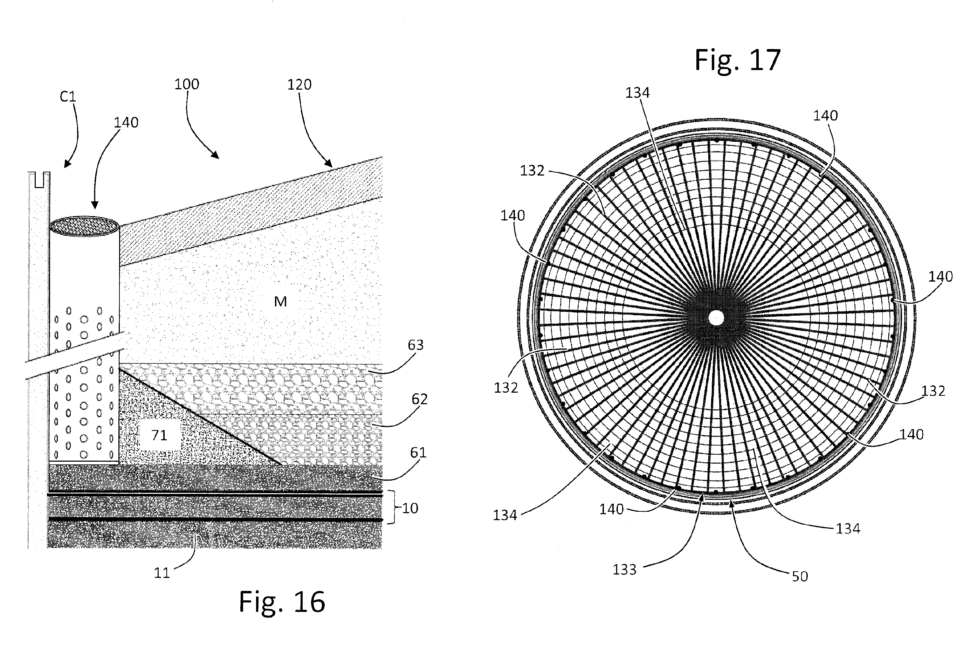

It should be noted that also within the structure 120, in particular above its tarpaulin 122, there can be provided radial drains and an external annular drain, of a similar design to those previously designated by 70 and 71. Said drains provided in the structure 120 are designated by 132 and 133 in Figure 14. Preferably, moreover, intermediate circular drains will be provided also in positions corresponding to the various steps of the structure of the bio-reactor 100, as exemplified in Figure 17, where said intermediate circular drains are designated by 134.

The meteoric waters or the waters coming from the towers 20-22 that penetrates in the waste M during construction of the bio-reactor 100 (plus the liquid fraction of the waste) evidently give rise to a polluted percolate, both because as they wash through the waste they get enriched chemically and biologically and because they are contaminated by the radionuclides.

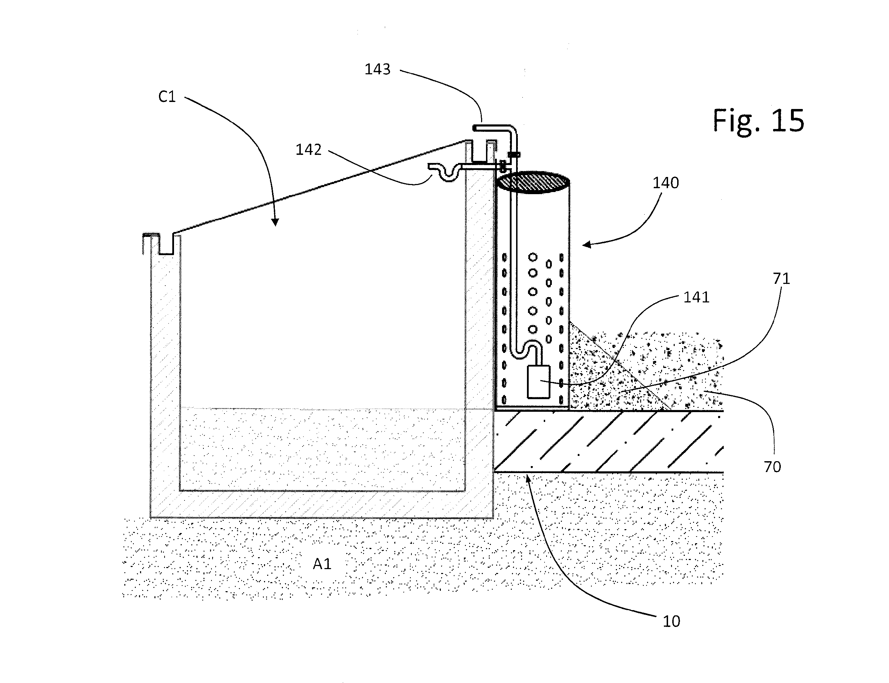

This percolate reaches the channel C1 during construction of the bio-reactor 100, through the drains 70 and 71, as well as through the holes 72 provided with the siphons 73 of the channel C1 (see Figure 7). Alternatively, and as may be clearly seen, for example, in Figure 15, in a position corresponding to the annular drain 71 there can be provided drains 140 closed at the top and provided with pumps 141. Upon command, these drains 140 introduce the water (or percolate) into the channel C 1, once again by means of a siphoned discharge 142, or else sends it directly on for purification, via a suitable conduit 143 (for example, a polyethylene pipe).

As may be seen also in Figures 16 and 17, the percolate-capturing wells 140 are set adjacent to the inner wall of the channel C1, at a distance from one another (for example, at a distance of 100 m) along the entire internal perimeter of the channel C1 itself and are preferably built so that they can be inspected (the diameter of the wells can be, for example, of 2 m). Preferably, the wells 140 are configured for enabling variation of the head of the percolate on the bed of the bio-reactor, according to the need.

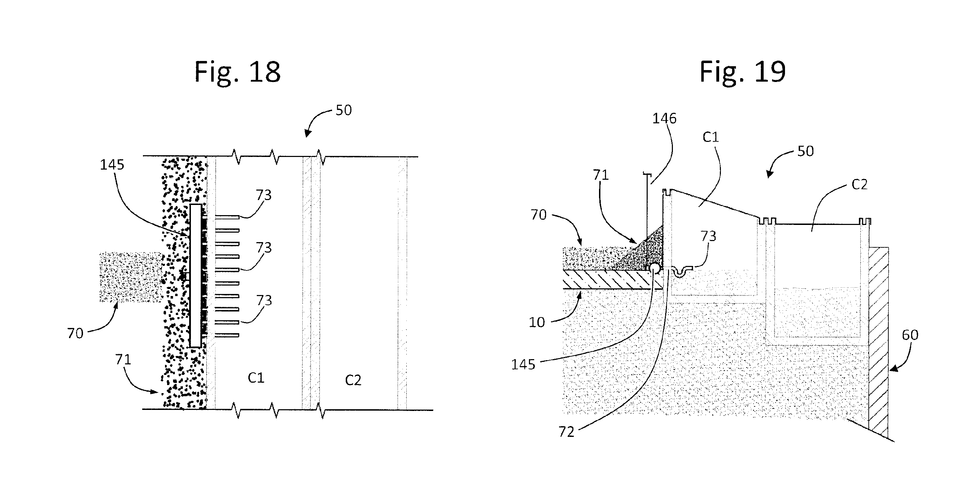

As an alternative to the drains 140, the percolate can penetrate into the channel C1 through batteries of siphoned holes provided in the inner wall of the channel C1, in a way similar to what is clearly represented in Figure 7. Said batteries of holes, with the corresponding siphons, are provided within the circular drain 71, at each radial drain 70, as exemplified in Figures 18 and 19. In such an embodiment, it is also possible to envisage a header 145 for each radial drain 70, set adjacent to the wall of the channel C1 and within the drain 71, with associated thereto a corresponding valve (in the example, openable and closable via the manual control 146). The presence of the siphons 73 enables flow of the percolate into the channel C1 without return of air, at the same time preventing exit of biogas and radiation from the bottom of the bio-reactor and preventing entry of ambient air into the bio-reactor itself. The holes 72 are of course provided substantially at the top level of the impermeabilization structure 10. Capture of the percolate through the wells 140 is in any case preferable, since it enables, if need be, bypassing of the channel C1 and direct flow of the percolate towards the corresponding purification plant.

The waters and/or the percolate accumulated in the channel C1 can be discharged into the channel C2. In the absence of accidents, within the channel C1 non-contaminated water is present and this can hence be discharged into the channel C2 by means of suitable partitions (not represented) that can be manoeuvred manually and/or with actuators. In the event of accident - and hence first of polluted surface water, and then of percolate from the bio-reactor 100 - the liquids received in the channel C1 are conveyed into purposely provided reservoirs for accumulation and treatment, where they can be treated before being discharged, by means of a suitable purification and decontamination system.

The channel C2 will receive, instead, all the meteoric waters and artificial waters generated by the towers 20-22 that flow on the bio-reactor 100. Preferably, the channel C2 is deeper than the channel C1, to be able to receive the waters from the channel C1 when they are clean and possibly cause them to flow into external surface watercourses. The channel C2 is preferably covered and constitutes a further reserve for containment and treatment in the case of contamination.

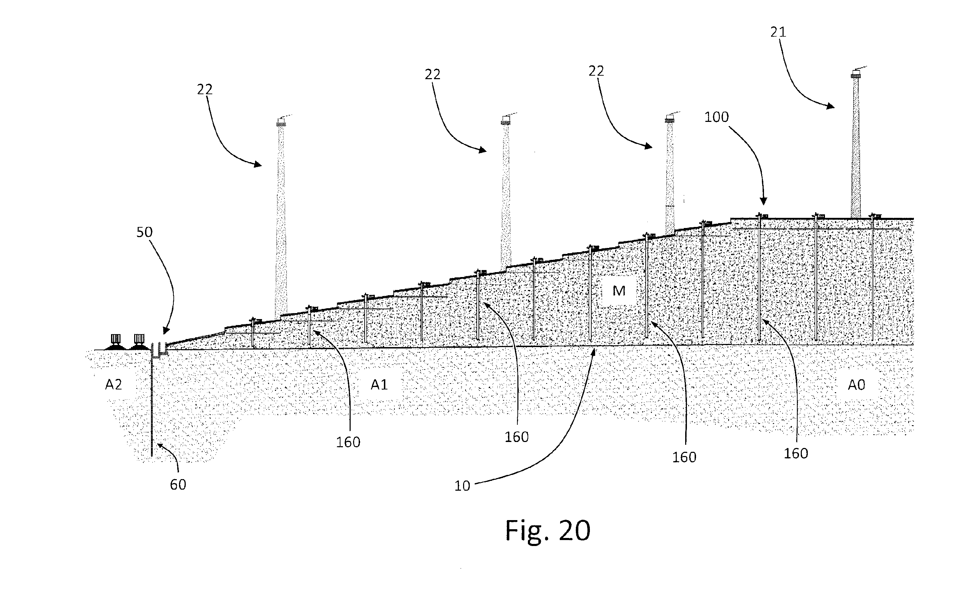

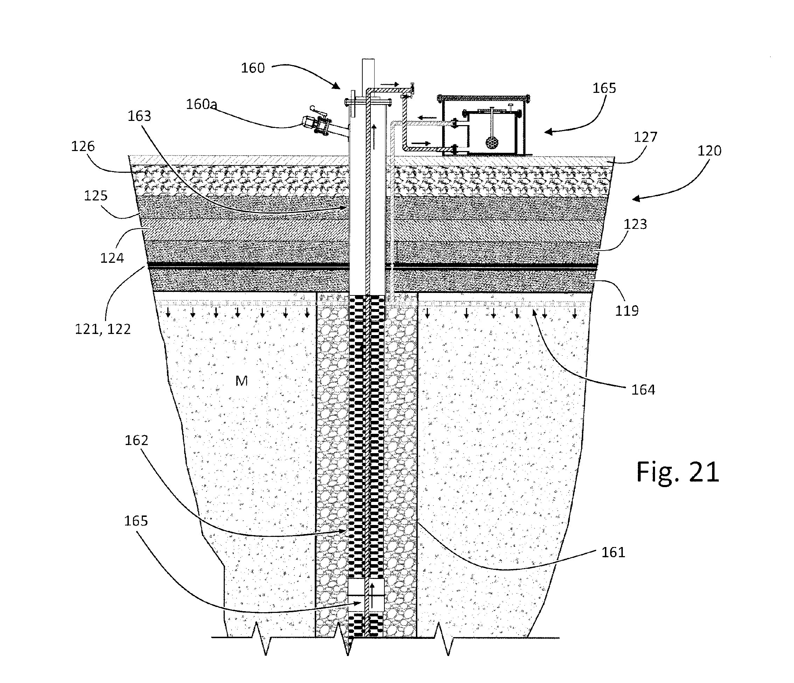

In the bio-reactor 100 biogas-capturing wells are provided, of a type in itself known, designated by 160 for example in Figure 20. Said drains 160 are connected, through purposely provided substations, to a ring-shaped header, for example, provided on the outside of the area A1, in the proximity of the diaphragm 60. The biogas-capturing wells 160 function also as percolate-capturing wells, as highlighted in Figure 21.

In order to build the wells 160, and before laying of the covering structure 120, in the compacted waste M that constitutes the bio-reactor 100 vertical channels 161 are provided, set in which is a slotted pipe 162, made, for example, of HDPE. Connected at the top to the pipe 162 is a non-slotted pipe 163, provided with the drain head and an outlet 160a for the biogas, with corresponding regulating valve. Before laying the covering structure 120, the vertical channel 161 is filled with gravel, on the outside of the pipe 162. Preferably, moreover, set horizontally immediately underneath the structure 120 is a micro-slotted pipe 164.

Extending through the pipes 162 and 163 is the pipe 165 for drawing in the percolate, which supplies a bio-digester 165, the return outlet of which is connected to the pipe 164, in such a way as to disperse moisture and heat within the biomass constituted by the waste M, and thus favour methanogenesis.

The biogas is captured from the bio-reactor 100 via the wells 160, while being kept continuously in negative pressure, is analysed on each well, and is conveyed to a purification centre, where the possible radionuclides are captured with known technologies. Preferably, the biogas is then sent on to an Otto-cycle internal-combustion engine, which burns it to produce electrical energy. The discharge gases of the aforesaid engine are burnt with the use of methane in a purposely provided post-combustor; the discharge gas can alternatively be sent on to a process with algae that digest CO₂.

Purification of the biogas enables capture of the radionuclides that possibly migrate with the biogas outside the bio-reactor 100 so that they can be encapsulated in purposely provided containers and sent on to certified treatment centres.

As may be seen, the nuclear power plant 1 is, at the end, englobed in a large bio-reactor, the methanogenic anaerobic activities of which in sealed environment carry out a blocking/fixing of radiation, which in the subsequent decades (reasonably approximately 50 years) will undergo the natural laws of microbial procreation. The part of radionuclides that migrates with the biogas will be captured, as has been said, in the step of purification of the biogas itself. The entire bio-reactor 100 will of course be under strict analytic control through the waters of the channels C1 and C2 and through the biogas and percolate-capturing wells.

From the above description, the characteristics and advantages of the present invention emerge clearly, amongst which there may be highlighted the following:
- the proposed system enables to limit the risk of contamination, by localizing it in the limits of the involved area;
- the system proposed enables precipitation of the contaminants by means of the artificial rain generated by the towers 20-22, added or otherwise with granular powders of zeolite or the like;
- the aforesaid artificial rain, even in the period subsequent to the accident, and during the possible construction of the bio-reactor 100, prevents the wind from displacing the contaminants;
- the impermeabilization and collection structures 10 and 50 prevent the meteoric water and the water sprinkled by the towers 20-22 from reaching the aquifers and/or the natural surface watercourses;
- the collection structure 50 enables containment of the aforesaid waters, for the purposes of subsequent decontamination treatment;
- the possible re-use of the area for environmental purposes, which otherwise could not be used any more;
- the possible bio-reactor 100, used for covering the non-recoverable plant 1, prevents continuous leakage of the contaminants after the accident and at the same time constitutes a vehicle for capturing the contaminants that exit from the underlying damaged plant;
- the use of urban solid waste, or its wet fraction, for creating the bio-reactor involves contained costs, and said material is readily available in large amounts in towns and urban centres that are located in the radius of 100-250 km from the power plant;
- the polluted percolate that is generated in the course of creation of the bio-reactor and during its service life can be handled in a simple way, and itself constitutes - together with the biogas - a vehicle for capturing the contaminants over time;
- the biogas generated by the bio-reactor enables considerable energy recovery, for example if used for supply of electric-power generators.

It is clear that numerous variants may be made to the system and to the method described by way example by a person skilled in the branch, without thereby departing from the scope of the invention as defined by the ensuing claims.

It is emphasized that, before creation of the bio-reactor 100, it is possible to provide at least one emergency and inspection tunnel, preferably with two entrances and two exits, which will enable the area A0 to be reached starting from the area A2, and with branches giving out into the premises of interest of the power plant 1. Said network of tunnels will, of course, be totally impermeabilized in regard to water and gases, using for example pipes of the sewerage type of adequate dimensions.

As mentioned previously, the invention finds its preferred application in combination with nuclear power plants and stations, both existing ones and newly built ones, but the invention may be applied also in the case of industrial plants that, in the event of accident, are subject to emission of noxious substances in the environment.

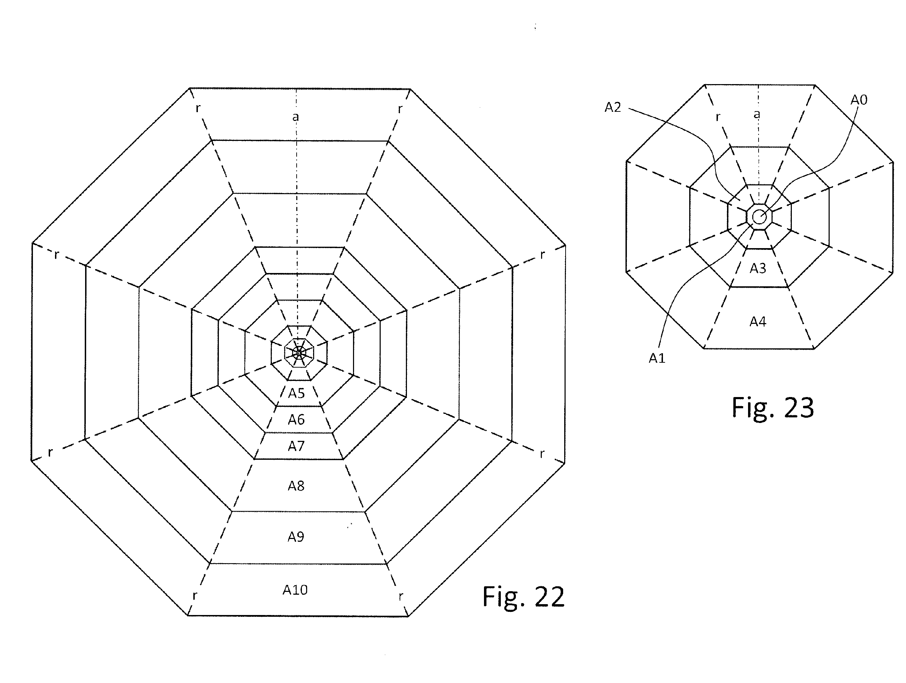

According to a possible implementation of the invention, in addition to the definition of the peripheral area A1, further areas are previously defined substantially concentric to the area A0, following the morphology of the ground and/or watercourses and/or bodies of water. In a preferred embodiment there are, for example, defined a further nine annular peripheral areas, as exemplified in Figures 22 and 23 (Figure 23 representing a detail of the central area of Figure 21). In the example shown, the aforesaid further annular areas are the following:
- Area A2, already previously mentioned, which can have indicatively a radius of approximately 500 m starting from the external perimeter of the previous area (A1) towards the internal perimeter of the next area (A3);
- Areas A3 and A4, each having a radius of approximately 2500 m starting from the external perimeter of the previous area towards the internal perimeter of the next area;
- Areas A5, A6 and A7, each having a radius of approximately 5000 m starting from the external perimeter of the previous area towards the internal perimeter of the next area;
- Area A8, A9 and A10, each having a radius of approximately 10000 m starting from the external perimeter of the previous area towards the internal perimeter of the next area.

In the embodiment exemplified, the areas A1-A10, which can be mapped by means of laser and/or GPS stations, have an internal perimeter and an external perimeter that are substantially octagonal (apart from the area A1, in the example, of which only the external perimeter is octagonal); said shape must on the other hand be understood as merely preferential and non-limiting.

Each annular peripheral area can be in turn divided into a number of sub-areas for purposes of subsequent analyses, as explained hereinafter. Once again with reference to the case exemplified in Figures 22 and 23, the aforesaid sub-areas (not represented) are defined by the eight radii "r" of the octagonal perimeters of the areas A1-A10, in order to define a total of eight equal sub-areas for each annular area. Of course, the number of the sub-areas could also be higher than the one exemplified, for example sixteen sub-areas for each area A1-A10 (envisaging in this case a division according to the eight radii "r" and the eight apothems "a" of the octagonal perimeter of the areas A1-A10). The definition of the peripheral areas and of the possible sub-areas is particularly useful for carrying out activities of analysis, both in the absence of and following upon an accident to the plant 1. The area A1 can also be divided into a plurality of concentric sub-areas, which also have a substantially octagonal perimeter, for example at approximately 50 m from one another. Said sub-areas are represented by way of example with a dashed line in Figure 3 and can correspond to steps of the bio-reactor 100, if this has to be built following upon an accident to the plant 1.

In one embodiment, it is then possible to carry out an activity of preventive analysis for each area A1-A10 or for the corresponding sub-areas. Said activity of analysis can comprise, for example, a chemical and biological analysis of the soil, a hydrogeological inquiry, and an agronomic study for determining the crops most suited for the soil of the various areas. Said crops are preferably selected from among known crops having capacity of adsorbance of contaminating substances, such as sunflowers. The agronomic study can be conducted on just the areas A2-A10 (and the possible corresponding sub-areas), given that the area A1 is designed, in the event of accident, to be covered by the bio-reactor 100.

The aforesaid step of preventive analysis can be carried out before construction of the structures of the system according to the invention or simultaneously therewith.

Following upon an accident to the plant 1 - and without prejudice to what has been described previously in relation to intervention of the system according to the invention and to construction of the bio-reactor - it is possible to carry out a new series of analyses similar to the previous ones and make a comparison with the data acquired prior to the accident to the plant 1 in order to acquire information on the possible changed conditions of the soil and subsoil in the areas surrounding the plant 1, considering the fact that part of the noxious emissions cannot be captured by the system that includes the impermeabilization structure 10, the sprinkling towers 20-22, and the collection structure 50, and is hence dispersed beyond the area A1. The post-accident analyses are preferably made periodically, for example first on a monthly basis, for example during the first year after the accident, and then on a quarterly basis, in the subsequent years.

As regards the agricultural crops, in the course of the first year after the accident it is possible to conduct tests on each area A2-A10, starting from the results of the agronomic study carried out prior to the accident; from the second year onwards, the crops may be cultivated effectively and in an intensive way according to the results of the tests conducted.

In the course of the first year after the accident it is also possible to carry out, alongside the biological analyses of the soil of the areas A2-A10, specific tests of microbiological bio-activation, with the use of microbial consortia, such as the non-genetically modified consortium ENZYVEBA^{®} referred to above. Said applicational tests, which are preferably conducted on all the areas A2-A10 (and on the possible sub-areas) are aimed at identifying the most suited micro-organisms and the advantages that they can achieve. After identification of the biological product/products and of the crops deemed most suitable, it is possible to start their extensive/intensive application/cultivation on the nine areas A2-A10.

In one embodiment, the harvest of the aforesaid crops is removed totally and is stored in one of the areas A2-A10, for example the area A2, in suitable silos, covered with sheets of the type used for maize silage. After a storage period (for example, one month), the material is taken out of the silos (by means of a remote-control desilator, if need be) and supplied to one or more anaerobic digesters of a known type (for example, provided according to the technology "MESAD" of the present applicant). Each digester, in a time indicatively comprised between 40 and 60 days, can digest the material through methanogenic bacteria, thus producing further biogas, in addition to the one produced by the bio-reactor 100. Said further biogas can be drawn off continuously and purified from the contaminants collected by the crops, in a way similar to what has been said in relation to the biogas produced by the bio-reactor 100. The digested substance can, instead, be desiccated and then incinerated in an incinerator furnace, the vapour generated from desiccation being also purified.

Following upon application/cultivation of the biological products and of the crops, in any case monitoring of the areas A2-A10 (and of the possible corresponding sub-areas) will be carried out in order to control evolution of the reclamation process.

## Claims

1. A system for capture and/or the abatement of noxious and contaminating emissions in the atmosphere from an industrial or nuclear plant (1) in the event of accident, such as toxic substances and/or radionuclides, comprising:
- a structure for impermeabilization of the ground (10), the impermeabilization structure (10) extending at least in an annular area (A1) that surrounds the plant (1);
- a plurality of sprinkling towers (20-22), which are arranged around the plant (1) and/or in the precincts thereof and operative to sprinkle water in the atmosphere over structures of the plant (1), preferably water added with chemical and/or biological and/or mineral substances;
- a peripheral collection structure (50), configured for receiving water withheld by the impermeabilization structure (10),
**characterized by** a system for activating delivery of water into the atmosphere by said sprinkling towers (20-22) in the event of accident to the plant (1), the system being specially adapted to generate an artificial rain able to limit diffusion of said emissions in the air and cause precipitation thereof on the impermeabilization structure (10), the impermeabilization structure (10) being designed to withheld the contaminated water and cause it to flow towards the peripheral collection structure (50), to be rendered safe.

2. The system according to Claim 1, wherein the plurality of towers comprises at least one between a series of sprinkling towers (20, 21) arranged in the precincts of the plant (1) and/or on its bounds and a series of sprinkling towers (22) arranged in the annular area (A1) that surrounds the plant (1), the towers (20-22) being preferably configured for sprinkling water to a height greater than that of structures of the plant (1).

3. The system according to Claim 1 or Claim 2, wherein each tower (20-21) is provided with means (31, 32, 40, 41) for supply of the water to be sprinkled, the supply means (31, 32, 40, 41) comprising a first tank (31) provided on the respective tower (20-22) in fluid communication with respective sprinkling means (30).

4. The system according to Claim 3, wherein the supply means (31, 32, 40, 41) comprise at least one second tank (40), the second tank (10) being in fluid communication with the first tank (31), in particular via a supply line (31) provided with pump.

5. The system according to any one of the preceding claims, wherein the collection structure (50) surrounds the impermeabilization structure (10) practically completely.

6. The system according to Claim 5, wherein the collection structure (50) comprises at least one annular channel (C1) having a wall substantially corresponding to the outer perimeter of the impermeabilization structure (10).

7. The system according to Claim 1, wherein the sprinkling towers (20-22) further comprise means for dispersion of powdery material, such as zeolite powders, into the atmosphere.

8. The system according to Claim 1, further comprising a plurality of first drains (70) arranged above the impermeabilization structure (10), the first drains (70) extending in a substantially radial direction up to or in the proximity of the outer perimeter of the annular area (A1).

9. The system according to Claims 6 and 8, further comprising at least one annular drain (71) set above the impermeabilization structure (10), into which the first drains (70) converge, the annular drain (71) substantially corresponding to said wall of the annular channel (C1) and being set in fluid communication with the inside thereof.

10. The system according to Claim 8, wherein the first drains (70) are formed with stones or crushed rocky material and are at least partially buried in one or more layers of material (62-64) laid on top of the impermeabilization structure (10).

11. The system according to any one of the preceding claims, wherein the impermeabilization structure (10) comprises a plurality of tarpaulins (12), between two tarpaulins (12) there preferably being set a layer of granular material (13), such as zeolites.

12. A method for the capture and/or the abatement of noxious emissions in the atmosphere from an industrial or nuclear plant (1) in the event of an accident, such as toxic substances and/or radionuclides, comprising the steps of:
- providing a structure for impermeabilization of the ground (10), the impermeabilization structure (10) extending at least in an annular area (A1) that surrounds the plant (1);
- providing a plurality of sprinkling towers (20-22), which are arranged around the plant (1) and/or in the precincts thereof and operative to sprinkle water into the atmosphere over structures of the plant (1), the towers (20-22) being preferably configured for sprinkling water to a height greater than that of said structures of the plant (1);
- providing a structure for collection of the water (50), configured for receiving water withheld by the impermeabilization structure (10); and
- in the event of accident to the plant, activating delivery of water by the sprinkling towers (20-22) to generate an artificial rain in order to contain the diffusion in the atmosphere of noxious and contaminating substances released by the plant (1) and causing precipitation thereof on the impermeabilization structure (10),
wherein the water sprinkled by the sprinkling towers (20-22) and contaminated following upon said precipitation is withheld by means of the impermeabilization structure (10), which then conveys the contaminated water towards the collection structure (50), to be rendered safe.

13. The method according to Claim 12, wherein, in the event of non-recoverability of the plant (1) following upon the accident, the following operations are envisaged:
- covering the plant (1) and the annular area (A1) that surrounds the plant (1) with a mass of material (M) suitable for creating a bio-reactor (100); and
- providing the bio-reactor (100) with means (140, 160) for collecting percolate inside the mass of material (M) and/or with means for capturing biogas (160) generated by the mass of material (M).

14. The method according to Claim 13, wherein the material (M) comprises urban solid waste in bulk form or in bales.

## Patentansprüche

1. System zum Einfangen und/oder Vermindern von ungesunden und kontaminierenden Emissionen von einer industriellen Anlage oder einem Kernkraftwerk (1) in die Atmosphäre im Falle eines Unfalls, wie toxische Substanzen und/oder Radionukleide, umfassend:
- Eine Struktur zur Undurchlässigmachung des Grundes (10), wobei sich die Undurchlässigkeitsstruktur (10) mindestens in einem ringförmigen Gebiet (A1) erstreckt, das die Anlage (1) umgibt;
- Eine Mehrzahl von Beregnungstürmen (20-22), die um die Anlage (1) herum und/oder in deren Umfeld angeordnet und eingerichtet sind, um Wasser in die Atmosphäre über Gebäude der Anlage (1) zu sprühen, vorzugsweise mit chemischen und/oder biologischen und/oder mineralischen Substanzen versehenes Wasser;
- Eine periphere Sammelstruktur (50), ausgelegt um Wasser aufzunehmen, welches von der Undurchlässigkeitsstruktur (10) zurückgehalten wurde ,
**gekennzeichnet durch**
- Ein System zur Aktivierung zur Förderung von Wasser in die Atmosphäre mittels der Beregnungstürme (20-22) im Falle eines Unfalls auf der Anlage (1), wobei das System speziell dazu angepasst ist, einen künstlichen Regen zu erzeugen, der in der Lage ist, die Diffusion der Emissionen in der Luft zu begrenzen und deren Ausfällung auf die Undurchlässigkeitsstruktur (10) zu verursachen, wobei die Undurchlässigkeitsstruktur (10) dazu ausgelegt ist, das kontaminierte Wasser zurückzuhalten und es in Richtung auf die periphere Sammelstruktur (50) fließen zu lassen, um sichergestellt zu werden.

2. System gemäß Anspruch 1, bei dem die Mehrzahl an Türmen wenigstens einen innerhalb einer Reihe von Beregnungstürmen (20, 21) umfasst, der im Umfeld der Anlage (1) angeordnet ist und/oder an deren Grenze und einer Reihe von Beregnungstürmen (22), angeordnet in dem ringförmigen Gebiet (A1), das die Anlage (1) umgibt, wobei die Türme (20-22) vorzugsweise ausgelegt sind, Wasser in eine Höhe zu versprühen, die größer als die von Gebäuden der Anlage (1) ist.

3. System gemäß Anspruch 1 oder 2, bei dem jeder Turm (20-21) mit Mitteln (31, 32, 40, 41) zur Versorgung mit zu versprühendem Wasser versehen ist, wobei die Versorgungsmittel (31, 32, 40, 41) einen ersten Tank (31) in Flüssigkeitsverbindung mit dem jeweiligen Versprühmittel (30) umfassen, der auf dem jeweiligen Turm (20-22) angeordnet ist.

4. System gemäß Anspruch 3, bei dem die Versorgungsmittel (31, 32, 40, 41) wenigstens einen zweiten Tank (40) in flüssigkeitsverbindung mit dem ersten Tank (31) umfassen, insbesondere über eine mit einer Pumpe versehenen Versorgungsleitung (31).

5. System gemäß einem der vorherigen Ansprüche, bei dem die Sammelstruktur (50) die Undurchlässigkeitsstruktur (10) praktisch vollständig umgibt.

6. System gemäß Anspruch 5, bei dem die Sammelstruktur (50) wenigstens einen ringförmigen Kanal (C1) mit einer Wand umfasst, die im Wesentlichen zum äußeren Umfang der Undurchlässigkeitsstruktur (10) korrespondiert.

7. System gemäß Anspruch 1, bei dem die Beregnungstürme (20-22) weiterhin Mittel zur Verteilung von pulverförmigem Material, wie ZeolithPulver, in die Atmosphäre umfassen.

8. System gemäß Anspruch 1, weiter umfassend eine Mehrzahl an ersten, oberhalb der Undurchlässigkeitsstruktur (10) angeordneten Abläufen (70), wobei sich die ersten Abläufe (70) in einer überwiegend radialen Richtung bis zur oder in die Nähe des äußeren Umfangs des ringförmigen Gebiets (A1) erstrecken.

9. System gemäß Anspruch 6 und 8, weiter umfassend wenigstens einen ringförmigen Ablauf (71), angeordnet oberhalb der Undurchlässigkeitsstruktur (10), in den die ersten Abläufe (70) zusammenlaufen, wobei der ringförmige Ablauf (71) im Wesentlichen zu der Wand des ringförmigen Kanals (C1) korrespondiert, und in fluidverbindung zu dessen Innenseite gesetzt ist.

10. System gemäß Anspruch 8, bei dem die ersten Abläufe (70) mit Steinen oder gebrochenem felsigen Material geformt und zumindest teilweise in einer oder mehreren Schichten von Material (62-64) eingegraben sind, das auf die Undurchlässigkeitsschicht (10) gelegt ist.

11. System gemäß irgendeinem der vorherigen Ansprüche, bei dem die Undurchlässigkeitsschicht (10) eine Mehrzahl an Abdeckplanen (12) aufweist, wobei zwischen zwei Abdeckplanen (12) vorzugsweise eine Schicht aus granularem Material (13), wie Zeolithe, angeordnet ist.

12. Verfahren zum Einfangen und/oder Vermindern von ungesunden Emissionen von einer industriellen Anlage oder einem Kernkraftwerk (1) in die Atmosphäre im Falle eines Unfalls, wie toxische Substanzen und/oder Radionukleide, umfassend die folgenden Schritte:
- Vorsehen einer Struktur zur Undurchlässigmachung des Grundes (10), wobei sich die Undurchlässigkeitsstruktur (10) mindestens in einem ringförmigen Gebiet (A1) erstreckt, das die Anlage (1) umgibt;
- Vorsehen einer Mehrzahl von Beregnungstürmen (20-22), die um die Anlage (1) herum und/oder in deren Umfeld angeordnet und eingerichtet sind, um Wasser in die Atmosphäre über Gebäude der Anlage (1) zu sprühen, wobei die Türme (20-22) vorzugsweise dazu ausgelegt sind, Wasser in eine Höhe zu versprühen, größer als die von Gebäuden der Anlage (1) ist;
- Vorsehen einer Struktur zum Sammeln des Wassers (50), ausgelegt um Wasser aufzunehmen, welches von der Undurchlässigkeitsstruktur (10) zurückgehalten wurde; und
- Im Fall eines Unfalls der Anlage, Aktivieren der Wasserzufuhr durch die Beregnungstürme (20-22), um einen künstlichen Regen zu erzeugen, um die Verteilung der durch die Anlage (1) freigesetzten ungesunden und kontaminierenden Emissionen in die Atmosphäre einzugrenzen und deren Ausfällung auf die Undurchlässigkeitsstruktur (10) zu bewirken,
- Wobei das von den Beregnungstürmen (20-22) versprühte und aufgrund der Ausfällung kontaminierte Wasser mittels der Undurchlässigkeitsstruktur (10) zurückgehalten wird, die dann das kontaminierte Wasser in die Sammelstruktur (50) weiterleitet, um dort sichergestellt zu werden.

13. Verfahren gemäß Anspruch 12, bei dem im Falle der Unrettbarkeit der Anlage (1) aufgrund des Unfalls die folgenden Schritte ins Auge gefasst werden:
- Überdecken der Anlage (1) und des ringförmigen Gebietes (A1), das die Anlage (1) umgibt, mit einer Masse von Material (M), welches geeignet ist, einen Bioreaktor (100) zu erzeugen; und
- Versehen des Bioreaktors (100) mit Mitteln (140, 160), um Sickerwasser im Inneren der Masse des Materials (M) zu sammeln und/oder mit Mitteln zum Einfangen von durch die Masse von Material (M) erzeugtem Biogas (160).

14. Verfahren gemäß Anspruch 13, bei dem das Material (M) festen städtischen Müll in Schüttform oder in Ballen umfasst.

## Revendications

1. Système pour la capture et/ou la réduction des émissions contaminantes et nocives dans l'atmosphère d'une installation industrielle ou d'une centrale nucléaire (1) en cas d'accident, telles que des substances toxiques et/ou radioactives, comprenant :
- une structure pour l'imperméabilisation du sol (10), la structure d'imperméabilisation (10) s'étendant au moins dans une zone annulaire (A1) qui entoure la centrale (1) ;
- une pluralité de tours d'arrosage (20-22) qui sont agencées autour de la centrale (1) et/ou dans ses alentours et opérationnelles pour pulvériser de l'eau dans l'atmosphère sur les structures de la centrale (1), de préférence de l'eau additionnée de substances chimiques et/ou biologiques et/ou minérales ;
- une structure de collecte périphérique (50) configurée pour recevoir l'eau refusée par la structure d'imperméabilisation (10),
**caractérisé par** :
un système pour activer la distribution de l'eau dans l'atmosphère par lesdites tours d'arrosage (20-22) en cas d'accident de la centrale (1), le système étant spécialement adapté pour générer une pluie artificielle pouvant limiter la diffusion desdites émissions dans l'air et provoquer sa précipitation sur la structure d'imperméabilisation (10), la structure d'imperméabilisation (10) étant conçue pour refuser l'eau contaminée et pour l'amener à s'écouler vers la structure de collecte périphérique (50), pour être rendue inoffensive.

2. Système selon la revendication 1, dans lequel la pluralité de tours comprennent au moins l'une parmi une série de tours d'arrosage (20, 21) agencées aux alentours de la centrale (1) et/ou sur ses limites et une série de tours d'arrosage (22) agencées dans la zone annulaire (A1) qui entoure la centrale (1), les tours (20-22) étant de préférence configurées pour pulvériser de l'eau à une hauteur supérieure à celle des structures de la centrale (1).

3. Système selon la revendication 1 ou la revendication 2, dans lequel chaque tour (20-21) est prévue avec des moyens (31, 32, 40, 41) pour alimenter l'eau à pulvériser, les moyens d'alimentation (31, 32, 40, 41) comprenant un premier réservoir (31) prévu sur la tour (20-22) respective en communication de fluide avec les moyens d'arrosage (30).

4. Système selon la revendication 3, dans lequel les moyens d'alimentation (31, 32, 40, 41) comprennent au moins un second réservoir (40), le second réservoir (10) étant en communication de fluide avec le premier réservoir (31), en particulier via une conduite d'alimentation (31) dotée d'une pompe.

5. Système selon l'une quelconque des revendications précédentes, dans lequel la structure de collecte (50) entoure pratiquement complètement la structure d'imperméabilisation (10).

6. Système selon la revendication 5, dans lequel la structure de collecte (50) comprend au moins un canal annulaire (C1) ayant une paroi correspondant sensiblement au périmètre externe de la structure d'imperméabilisation (10).

7. Système selon la revendication 1, dans lequel les tours d'arrosage (20-22) comprennent en outre des moyens pour la dispersion d'une matière sous forme de poudre, telle que des poudres de zéolite, dans l'atmosphère.

8. Système selon la revendication 1, comprenant en outre une pluralité de premiers drains (70) agencés au-dessus de la structure d'imperméabilisation (10), les premiers drains (70) s'étendant dans une direction sensiblement radiale jusqu'au périmètre externe de la zone annulaire (A1) ou à proximité de ce dernier.

9. Système selon les revendications 6 et 8, comprenant en outre au moins un drain annulaire (71) placé au-dessus de la structure d'imperméabilisation (10), dans laquelle les premiers drains (70) convergent, le drain annulaire (71) correspondant sensiblement à ladite paroi du canal annulaire (C1) et étant placé en communication de fluide avec son intérieur.

10. Système selon la revendication 8, dans lequel les premiers drains (70) sont formés avec des pierres ou un matériau rocheux concassé et sont au moins partiellement enterrés dans une ou plusieurs couches de matériau (62-64) posées sur le dessus de la structure d'imperméabilisation (10).

11. Système selon l'une quelconque des revendications précédentes, dans lequel la structure d'imperméabilisation (10) comprend une pluralité de bâches (12), entre deux bâches (12), on pose de préférence une couche de matériau granulaire (13), telles que des zéolites.

12. Procédé pour la capture et/ou la réduction des émissions nocives dans l'atmosphère d'une installation industrielle ou d'une centrale nucléaire (1) en cas d'accident, telles que les substances toxiques et/ou radioactives, comprenant les étapes consistant à :
- prévoir une structure pour l'imperméabilisation du sol (10), la structure d'imperméabilisation (10) s'étendant au moins dans une zone annulaire (A1) qui entoure la centrale (1) ;
- prévoir une pluralité de tours d'arrosage (20-22) qui sont agencées autour de la centrale (1) et/ou dans ses alentours et opérationnelles pour pulvériser de l'eau dans l'atmosphère sur les structures de la centrale (1), les tours (20-22) étant de préférence configurées pour pulvériser de l'eau à une hauteur supérieure à celle desdites structures de la centrale (1) ;
- prévoir une structure pour la collecte de l'eau (50), configurée pour recevoir l'eau refusée par la structure d'imperméabilisation (10) ; et
en cas d'accident de la centrale, activer la distribution de l'eau par les tours d'arrosage (20-22) afin de générer une pluie artificielle pour contenir la diffusion dans l'atmosphère de substances nocives et contaminantes libérées par la centrale (1) et provoquer sa précipitation sur la structure d'imperméabilisation (10),
dans lequel l'eau pulvérisée par les tours d'arrosage (20-22) et contaminée suite à ladite précipitation est refusée au moyen de la structure d'imperméabilisation (10) qui transporte ensuite l'eau contaminée vers la structure de collecte (50), pour la rendre inoffensive.

13. Procédé selon la revendication 12, dans lequel, dans le cas dans lequel on ne peut pas récupérer la centrale (1) suite à l'accident, on envisage les opérations suivantes consistant à :
- couvrir la centrale (1) et la zone annulaire (A1) qui entoure la centrale (1) avec une masse de matériau (M) appropriée pour créer un bioréacteur (100) ; et
- doter le bioréacteur (100) de moyens (140, 160) pour collecter le percolat à l'intérieur de la masse de matériau (M) et/ou de moyens pour capturer le biogaz (160) généré par la masse de matériau (M).

14. Procédé selon la revendication 13, dans lequel le matériau (M) comprend un déchet solide urbain en vrac ou en balles.
